Europäisches Patentamt

European Patent Office

Office européen des brevets

(19)

(11) **EP 1 628 228 A2**

(12) **EUROPEAN PATENT APPLICATION**

(43) Date of publication:
 **22.02.2006 Bulletin 2006/08**

(51) Int Cl.:
 **G06F 17/24** (2006.01)

(21) Application number: **05104619.1**

(22) Date of filing: **30.05.2005**

(84) Designated Contracting States:
 **AT BE BG CH CY CZ DE DK EE ES FI FR GB GR HU IE IS IT LI LT LU MC NL PL PT RO SE SI SK TR**
 Designated Extension States:
 **AL BA HR LV MK YU**

(30) Priority: **13.08.2004 US 917610**

(71) Applicant: **MICROSOFT CORPORATION**
 **Redmond, WA 98052 (US)**

(72) Inventors:
 • **Hobbs, Craig A.**
  **Redmond, Washington 98052 (US)**
 • **Clay, Daniel**
  **Redmond, Washington 98052 (US)**

(74) Representative: **Grünecker, Kinkeldey,**
 **Stockmair & Schwanhäusser**
 **Anwaltssozietät**
 **Maximilianstrasse 58**
 **80538 München (DE)**

(54) **User-Specified Spreadsheet Functions**

(57) A facility for enabling the use of user-defined function in a spreadsheet document made up of cells is described. The facility receives a trigger to evaluate cells that include a distinguished cell. In response to receiving the trigger, the facility determines that the distinguished cell contains an invocation of a user-defined function. In response to determining that the distinguished cell contains an invocation of a user-defined function, the facility applies the user-defined function defined in the second cell to both (a) determine a result value for the invocation of the user-defined function and (b) from the determiner's old value, obtain a value for the distinguished cell.

FIG. 3

EP 1 628 228 A2

**Description**

TECHNICAL FIELD

The present invention is directed to the field of software application customization, and, more particularly, to the field of user-customization of software applications.

BACKGROUND

Spreadsheet applications like MICROSOFT EXCEL permit their users to perform mathematical calculations. In particular, spreadsheet applications enable users to create worksheet documents that are divided into cells, which are typically arranged in rows and columns. The user can specify contents for any cell in a worksheet. Where a cell contains a mathematical formula, the spreadsheet application attempts to evaluate the mathematical formula to obtain a result for the cell.

As one example, the user may specify that a cell contains a mathematical formula that is a single constant, which evaluates to itself:

$$A1: \ 5 = 5 \qquad\qquad (1)$$

The user may also specify that a cell contains a mathematical formula that is comprised of one or more operands having constants as their operands:

$$A2: \ 40 \ / \ 5 = 8 \qquad\qquad (2)$$

The user may also specify that a cell contains a mathematical formula that references the results of one or more other cells:

$$A3: \ A1 + A2 = 5 + 8 = 13 \qquad\qquad (3)$$

The user may also specify that a cell contains a mathematical formula that includes one or more built-in functions, such as the square root (SQRT) function:

$$A2: \ SQRT \ (9) = 3 \qquad\qquad (4)$$

Typically, a set of built-in functions is defined for a spreadsheet application by the developers of the spreadsheet application. Users of the spreadsheet application can use any of these built-in functions in a worksheet. In some spreadsheet applications, users cannot define their own built-in functions. Other spreadsheet applications permit users to define their own built-in functions, but only in ways that require significant familiarity with computer languages and, in some cases, other sophisticated software development tools. In these spreadsheet applications, a user defines his or her own built-in function not by editing a spreadsheet, but rather by creating a separate programmatic entity that is called by the spreadsheet program.

A cell reference included in an formula contained in a cell may either be an absolute reference or a relative reference. If the cell reference is absolute, when the formula is copied from its source cell to a target cell, the referenced cell is the same as the same in the target cell as in the source cell. For example, if the formula below for cell B1, which includes an absolute reference to cell A1 ("$A$1"), is copied to cell B2, cell B2 afterward has the same contents and result as cell B1:

$$B1: \ \$A\$1 + 10 = 15 \qquad\qquad (5)$$
$$B2: \ \$A\$1 + 10 = 15$$

On the other hand, if the cell reference is relative, when the formula is copied, the referenced cell in the target cell bears the same relationship to the target cell that the referenced cell in the source cell bears to the source cell. For example if the formula below for cell C1, which includes a relative reference to cell A1 ("A1"), is copied to cell C2, cell C2 afterward has the contents and result shown below:

$$C1:\ A1 + 10 = 15 \hspace{4cm} (6)$$

$$C2:\ A2 + 10 = 18$$

It can be seen that, when the contents of cell C1 were copied to cell C2, the relative reference to cell A1 in cell C1 was changed to a reference to cell A2 in cell C2.

Cell formulas are commonly copied in this manner to perform the same set of operations on each of a number of different sets of input data. For example, in a spreadsheet where each of 500 rows corresponds to a different shipment of items, the first column may contain the total weight of the shipment, and the second column may contain the number of items in the shipment. To calculate the average weight per item for each shipment, the user may, at the cell in the second row and third column, specify an formula that is the truncated quotient of the first and second columns:

$$C2:\ TRUNC\ (A2/B2,\ 0) \hspace{4cm} (7)$$

The user can then copy that formula, containing relative references to cells A2 and B2, to each of the other cells in the third column:

$$C3:\ TRUNC\ (A3/B3,\ 0)$$

$$\ldots \hspace{5cm} (8)$$

$$C501:\ TRUNC\ (A501/B501,\ 0)$$

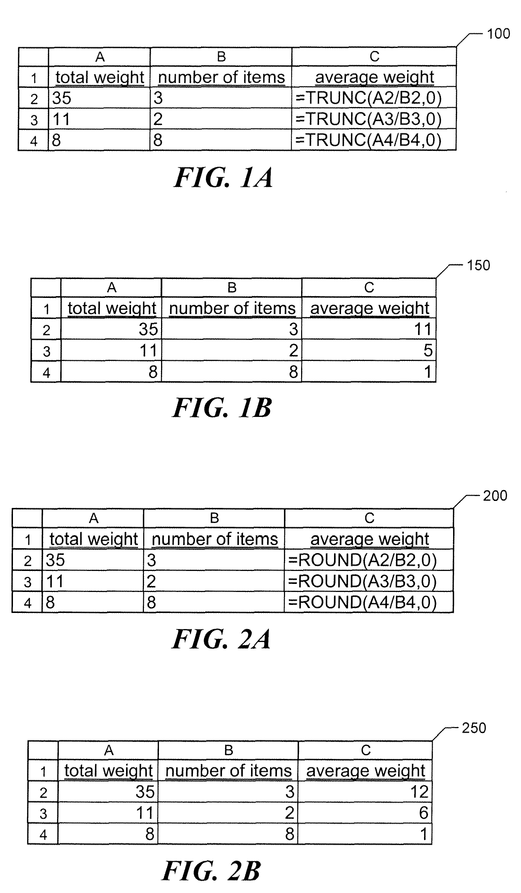

Figure 1A is a spreadsheet diagram showing a portion 100 of such a spreadsheet with the formulas contained by each cell displayed. Figure 1B is a spreadsheet diagram showing a portion 150 of the same spreadsheet with the results of the formulas contained by each cell displayed.

If the user later decides that the quotients contained in the third column should be rounded rather than truncated, the user must first modify the contents of row C2 as follows:

$$C2:\ ROUND\ (A2/B2,\ 0) \hspace{4cm} (9)$$

The user must then re-copy these new contents of cell C2 to the other cells in the third column as follows:

$$C3:\ ROUND\ (A3/B3,\ 0)$$

$$\ldots \hspace{5cm} (10)$$

$$C501:\ ROUND\ (A501/B501,\ 0)$$

Figure 2A is a spreadsheet diagram showing a portion 200 of such a spreadsheet with the formulas contained by each cell displayed. Figure 2B is a spreadsheet diagram showing a portion 250 of such a spreadsheet with the results of the formulas contained by each cell displayed.

The process outlined above can in many situations require a substantial amount of manual effort. Throughout this process, there is a risk that the user will make an error, compromising the accuracy of portions of the spreadsheet.

In view of the foregoing, a spreadsheet application that permitted a user to specify and use a user-defined function using native formula syntax and formula evaluation, and update the behavior of the function everywhere the function is used with a single modification, would have significant utility.

BRIEF DESCRIPTION OF THE DRAWINGS

Figures 1A-2B are spreadsheet documents showing a conventional approach to performing the same set of operations on each of a number of different sets of input data in the spreadsheet.
Figure 3 is a block diagram illustrating an example of a suitable computing system environment in which the facility may be implemented.
Figures 4A-5B are spreadsheet diagrams depicting the use of the facility to prepare a spreadsheet similar to the one shown in Figures 1A-2B.
Figure 6 is a flow diagram showing steps typically performed by the facility when the function F is called.
Figure 7 is a stack diagram showing the state of the evaluation context stack after the facility performs step 603 for the invocation of function F.
Figure 8 is a flow diagram showing steps typically performed by the facility each time the function R is called.
Figures 9A-9B show a second example, in which the arguments X and Y are passed to a first user-defined function, which in turns calls a second user-defined function to which it passes a separate parameter X.
Figures 10A-10B are stack diagrams showing the contents of the evaluation context stack at different points in the second example.
Figures 11A-11B are spreadsheet diagrams showing a third example.
Figure 12 is a stack diagram showing the contents of the evaluation context stack during the third example.

DETAILED DESCRIPTION

A software facility that enables users to specify user-defined functions for use in a spreadsheet using native formula syntax and formula evaluation ("the facility") is described. In some embodiments, the facility adds to a set of built-in functions shipped with conventional spreadsheet application two additional functions: (1) a built-in function called from a spreadsheet cell to invoke a user-defined function and optionally pass arguments to the user-defined function—in some embodiments named F—and (2) a built-in function called by a user-defined function to retrieve arguments passed to the user-defined function—in some embodiments named R.
A user specifies a user-defined function by entering an formula for the function into a spreadsheet cell. This cell is referred to herein as the function definition cell. As part of the formula, the user includes calls to R to retrieve the result of each argument needed to evaluate the function. For example, in the formula that follows, R is invoked to retrieve results for the two arguments of the user-defined function, total_weight and number_items. These arguments are divided, and the result is truncated to zero decimal places:

$$A1: \ \text{TRUNC} \ (R(\text{"total\_weight"})/R(\text{"number\_items"}), \ 0) \qquad (11)$$

A user calls the user-defined function by entering a call to F into a spreadsheet cell. This cell is referred to herein as the function calling cell. A call to F passes in (a) a reference to the function definition cell for the user-defined function being called and (b) zero or more name/result pairs each corresponding to an argument of the user-defined function. For example, in the formula that follows, F is called to evaluate the user-defined function defined in cell A1, with the argument name/result pairs (total_weight, A4) and (number_items, B4):

$$C4: \ F(A1, \ \text{"total\_weight"}, \ A4, \ \text{"number\_items"}, \ B4) \qquad (12)$$

Some spreadsheet applications enable users to name individual cells. If, for example, the user named cell A1 "AverageWeight", the function calling cell could instead contain the following argument, in which the cell name "AverageWeight" is substituted for the column/row cell reference A1:

$$C4: \ F(\text{AverageWeight}, \ \text{"total\_weight"}, \ A4, \ \text{"number\_items"}, \ B4) \qquad (13)$$

In some embodiments, the facility stores user-defined function argument results by name on a stack, called an evaluation context stack. The arguments are said to be stored on the stack in argument "registers."

In some embodiments, the facility provides scoping services for the arguments of the user-defined function in connection with the evaluation context stack. These scoping services (1) ensure that any local references in the function definition are translated into references that are global enough to identify the referenced cell from within the calling cell's evaluation context; (2) ensure that the most recently-passed result for a given argument name is used in the function's evaluation; and/or (3) where (a) a first function is defined to call a second function, and (b) no result for a given argument name is passed from the first function to the second function, enable the second function to use a result for that argument name passed to the first function, or an ancestor in the chain of functions that called the first function, known as "dynamic scoping." In some embodiments, however, the facility instead implements static scoping, in which a register will only be found if it was passed in the evaluation context for the current function call.

By enabling users to specify user-defined functions for use in a spreadsheet in some or all of the manners outlined above, the facility permits users to more efficiently and straightforwardly create, maintain, and exploit reusable formulas.

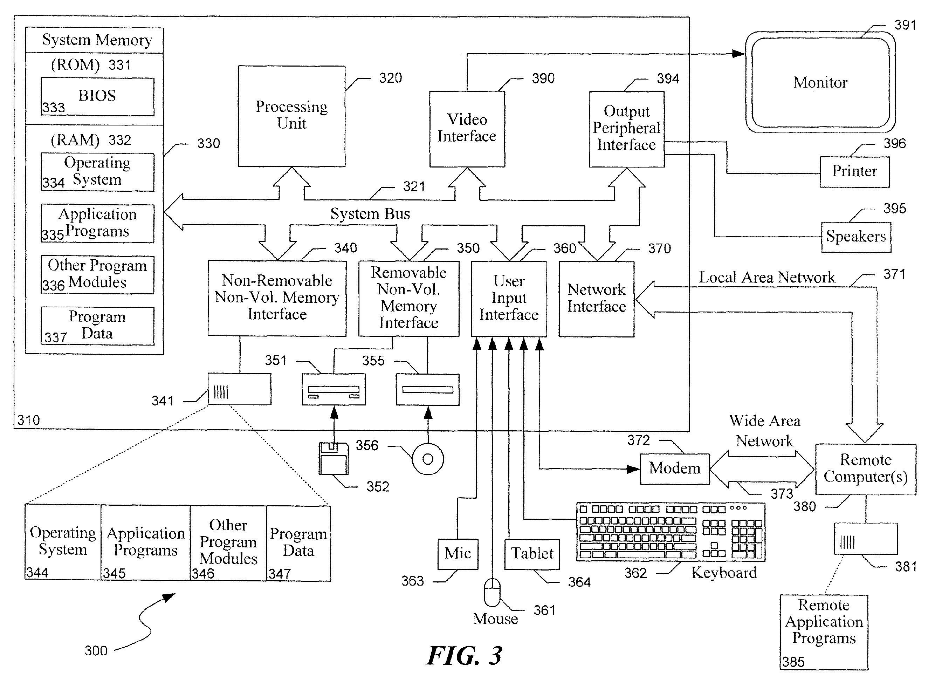

Figure 3 is a block diagram illustrating an example of a suitable computing system environment 300 in which the facility may be implemented. The computing system environment 300 is only one example of a suitable computing environment and is not intended to suggest any limitation as to the scope of use or functionality of the facility. Neither should the computing environment 300 be interpreted as having any dependency or requirement relating to any one or combination of components illustrated in the exemplary operating environment 300.

The facility is operational with numerous other general purpose or special purpose computing system environments or configurations. Examples of well known computing systems, environments, and/or configurations that may be suitable for use with the facility include, but are not limited to: personal computers, server computers, hand-held or laptop devices, tablet devices, multiprocessor systems, microprocessor-based systems, set top boxes, programmable consumer electronics, network PCs, minicomputers, mainframe computers, distributed computing environments that include any of the above systems or devices, and the like.

The facility may be described in the general context of computer-executable instructions, such as program modules, being executed by a computer. Generally, program modules include routines, programs, objects, components, data structures, and so forth, which perform particular tasks or implement particular abstract data types. The facility may also be practiced in distributed computing environments where tasks are performed by remote processing devices that are linked through a communications network. In a distributed computing environment, program modules may be located in local and/or remote computer storage media including memory storage devices.

With reference to Figure 3, an exemplary system for implementing the facility includes a general purpose computing device in the form of a computer 310. Components of the computer 310 may include, but are not limited to, a processing unit 320, a system memory 330, and a system bus 321 that couples various system components including the system memory to the processing unit 320. The system bus 321 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

The computer 310 typically includes a variety of computer-readable media. Computer-readable media can be any available media that can be accessed by the computer 310 and includes both volatile and nonvolatile media, and removable and non-removable media. By way of example, and not limitation, computer-readable media may comprise computer storage media and communication media. Computer storage media includes volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can accessed by the computer 310. Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of the any of the above should also be included within the scope of computer-readable media.

The system memory 330 includes computer storage media in the form of volatile and/or nonvolatile memory such as read only memory (ROM) 331 and random access memory (RAM) 332. A basic input/output system 333 (BIOS), containing the basic routines that help to transfer information between elements within computer 310, such as during start-up, is typically stored in ROM 331. RAM 332 typically contains data and/or program modules that are immediately accessible to and/or presently being operated on by processing unit 320. By way of example, and not limitation, Figure 3 illustrates operating system 334, application programs 335, other program modules 336 and program data 337.

The computer 310 may also include other removable/non-removable, volatile/nonvolatile computer storage media. By way of example only, Figure 3 illustrates a hard disk drive 341 that reads from or writes to non-removable, nonvolatile magnetic media, a magnetic disk drive 351 that reads from or writes to a removable, nonvolatile magnetic disk 352, and an optical disk drive 355 that reads from or writes to a removable, nonvolatile optical disk 356 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 341 is typically connected to the system bus 321 through a non-removable memory interface such as interface 340, and magnetic disk drive 351 and optical disk drive 355 are typically connected to the system bus 321 by a removable memory interface, such as interface 350.

The drives and their associated computer storage media, discussed above and illustrated in Figure 3, provide storage of computer-readable instructions, data structures, program modules and other data for the computer 310. In Figure 3, for example, hard disk drive 341 is illustrated as storing operating system 344, application programs 345, other program modules 346 and program data 347. Note that these components can either be the same as or different from operating system 334, application programs 335, other program modules 336, and program data 337. Operating system 344, application programs 345, other program modules 346, and program data 347 are given different numbers herein to illustrate that, at a minimum, they are different copies. A user may enter commands and information into the computer 310 through input devices such as a tablet, or electronic digitizer, 364, a microphone 363, a keyboard 362 and pointing device 361, commonly referred to as mouse, trackball or touch pad. Other input devices not shown in Figure 3 may include a joystick, game pad, satellite dish, scanner, or the like. These and other input devices are often connected to the processing unit 320 through a user input interface 360 that is coupled to the system bus, but may be connected by other interface and bus structures, such as a parallel port, game port or a universal serial bus (USB). A monitor 391 or other type of display device is also connected to the system bus 321 via an interface, such as a video interface 390. The monitor 391 may also be integrated with a touch-screen panel or the like. Note that the monitor and/or touch screen panel can be physically coupled to a housing in which the computing device 310 is incorporated, such as in a tablet-type personal computer. In addition, computers such as the computing device 310 may also include other peripheral output devices such as speakers 395 and printer 396, which may be connected through an output peripheral interface 394 or the like.

The computer 310 may operate in a networked environment using logical connections to one or more remote computers, such as a remote computer 380. The remote computer 380 may be a personal computer, a server, a router, a network PC, a peer device or other common network node, and typically includes many or all of the elements described above relative to the computer 310, although only a memory storage device 381 has been illustrated in Figure 3. The logical connections depicted in Figure 3 include a local area network (LAN) 371 and a wide area network (WAN) 373, but may also include other networks. Such networking environments are commonplace in offices, enterprise-wide computer networks, intranets and the Internet. For example, in the present facility, the computer system 310 may comprise source machine from which data is being migrated, and the remote computer 380 may comprise the destination machine. Note however that source and destination machines need not be connected by a network or any other means, but instead, data may be migrated via any media capable of being written by the source platform and read by the destination platform or platforms.

When used in a LAN networking environment, the computer 310 is connected to the LAN 371 through a network interface or adapter 370. When used in a WAN networking environment, the computer 310 typically includes a modem 372 or other means for establishing communications over the WAN 373, such as the Internet. The modem 372, which may be internal or external, may be connected to the system bus 321 via the user input interface 360 or other appropriate mechanism. In a networked environment, program modules depicted relative to the computer 310, or portions thereof, may be stored in the remote memory storage device. By way of example, and not limitation, Figure 3 illustrates remote application programs 385 as residing on memory device 381. It will be appreciated that the network connections shown are exemplary and other means of establishing a communications link between the computers may be used.

While various functionalities and data are shown in Figure 3 as residing on particular computer systems that are arranged in a particular way, those skilled in the art will appreciate that such functionalities and data may be distributed in various other ways across computer systems in different arrangements. While computer systems configured as described above are typically used to support the operation of the facility, one of ordinary skill in the art will appreciate that the facility may be implemented using devices of various types and configurations, and having various components.

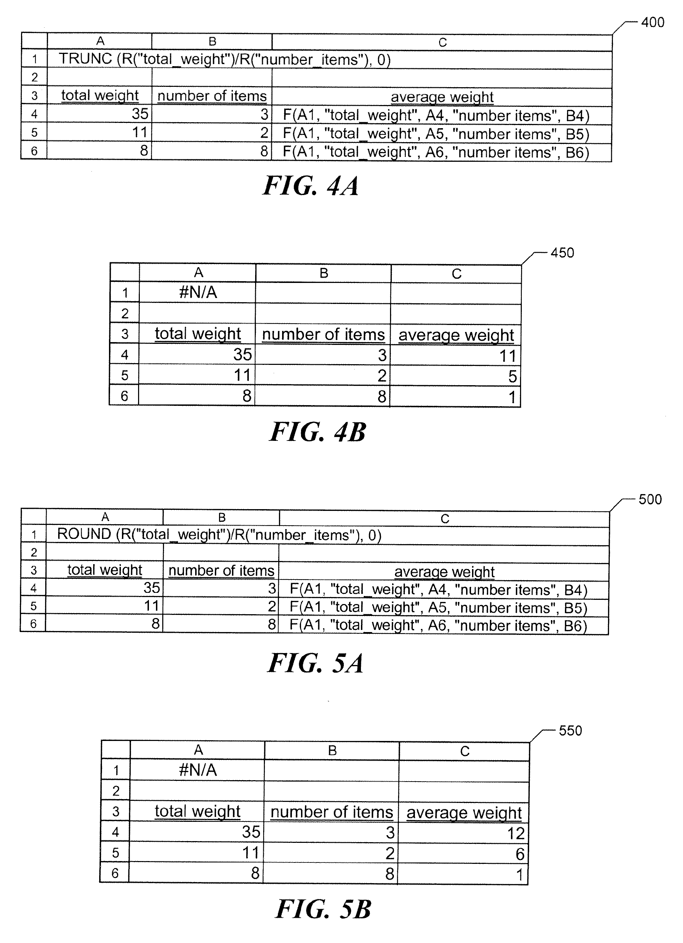

Figures 4A-5B are spreadsheet diagrams depicting the use of the facility to prepare a spreadsheet similar to the one shown in Figures 1A-2B. Figure 4A shows a spreadsheet portion 400 in the first state with the formulas, or "formulas," of each cell displayed. It can be seen that cell A1 contains the function definition shown on line (11) above. It can further be seen that cells C4-C6 and spreadsheet portion 400 include calls to the user-defined function in cell A1 similar to the one shown on line (12) above.

Figure 4B shows the same spreadsheet portion 450 with the results of the formulas contained by each cell displayed. For example, it can be seen that the formula in cell 4C evaluated to the result 11, truncated from 11.6, the quotient of 35 over 3. It can also be seen in Figure 4B that the function definition cell A1 evaluates to the result #N/A since it contains calls to the R function that are executed with empty evaluation contexts that do not contain the registered names passed in the calls to the R function. In some embodiments, where the R function is implemented in a way that returns 0 for register names not found in the evaluation context function definition cell A1 would contain the error message #DIV/0! Rather than the error message #N/A, as it would evaluate to TRUNC (0/0,0). In some embodiments, the R function is implemented to take a second, optional argument that specifies a default value to be returned by the R function if the registered name specified in the R function call is not found in the evaluation context.

Figure 5A shows the same spreadsheet portion 500 after the function definition in cell A1 has been changed to the formula below.

$$\text{ROUND (R("total\_weight")/R("number\_items"), 0)} \qquad (14)$$

Because cells C4-C6 all refer to the function definition in cell A1, none of these needs to be changed in order to take advantage of the revised function definition shown in Figure 5A.

Figure 5B shows the same spreadsheet portion 550 with the results of the formulas contained by each cell displayed. It can be seen, for example, that cell C4 now has the result 12, obtained by rounding the quotient 11.6 to 12.

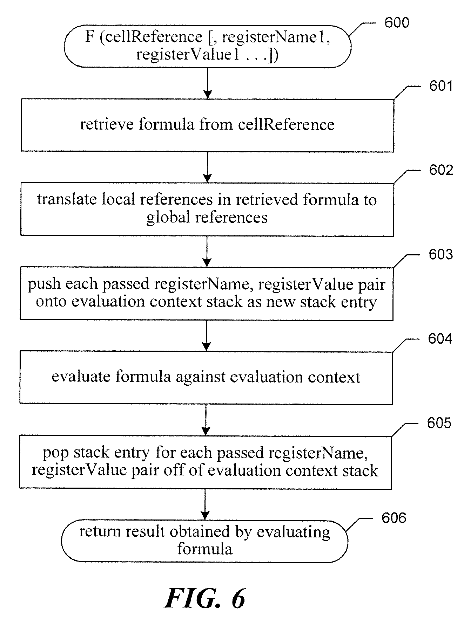

Figure 6 is a flow diagram showing steps typically performed by the facility when the function F is called. In step 600, the function F is called. Each such call passes, at a minimum, a cellReference parameter that is a reference to a cell containing the user-defined function to be evaluated. Each call to the function F can further include one or more name/result pairs for arguments defined for the function to be evaluated. In step 601, the facility retrieves the formula for the user-defined function from the function definition cell identified by the cellReference parameter. For example, for the invocation of the function F shown in line (12) above, the facility retrieves the formula from cell A1. In step 602, the facility translates any local references contained by the retrieved formula into global references that can be used in the function evaluation context. In step 603, the facility pushes each pair of registeredName and registeredResult parameters onto the evaluation context stack as a new stack entity.

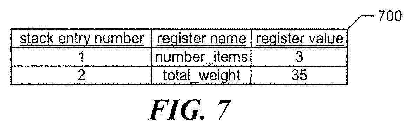

Figure 7 is a stack diagram showing the state of the evaluation context stack after the facility performs step 603 for the invocation of function F shown above on line (12). It can be seen that the top entry on stack 700 contains the result 3, retrieved from cell B4 shown in Figure 5B, for a register name "number_items.". The stack also contains a result 35, retrieved from cell A4 shown in Figure 5B, for a register name "total_weight".

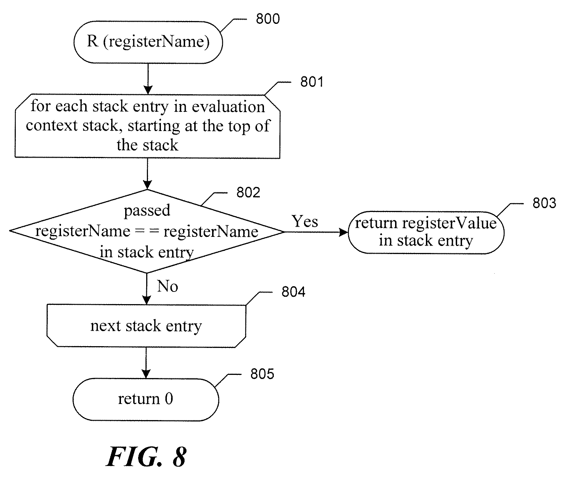

Returning to Figure 6, in step 604, the facility evaluates the formula against the evaluation context established with the evaluation context stack. For each reference to the function R encountered while evaluating the formula, the facility typically performs the steps shown in Figure 8, discussed below. In step 605, the facility pops the stack entry for each passed registerName and registervalue pair off of the evaluation context stack. In the example, after the facility performs step 605, the evaluation context stack is empty. In step 606, the facility returns the result obtained by evaluating the formula.

Figure 8 is a flow diagram showing steps typically performed by the facility each time the function R is called. In step 800, the function R is called with a single parameter, registerName. In steps 801-804, the facility loops through each stack entry in the evaluation context stack, starting at the top of the stack and progressing downward in the stack. In step 802, if the registerName passed as a parameter to the function R matches the registerName of the current stack entry, then the facility continues in step 803 to return the registervalue in the current stack entry, else the facility continues in step 804. In step 804, if additional stack entries remain to be processed, then the facility continues in step 801 to process the next stack entry, else the facility continues in step 805. In step 805, the facility returns 0.

Figure 8 shows a linear search through a stack for the matching register. In some embodiments, the facility uses a potentially more efficient search through a tree of registers, such as a balanced, binary red-black tree of registers.

Figure 8 shows the application of dynamic scoping. In some embodiments, however, the facility uses static scoping, and this search in the R function is only performed for arguments pushed onto the stack for the current function evaluation.

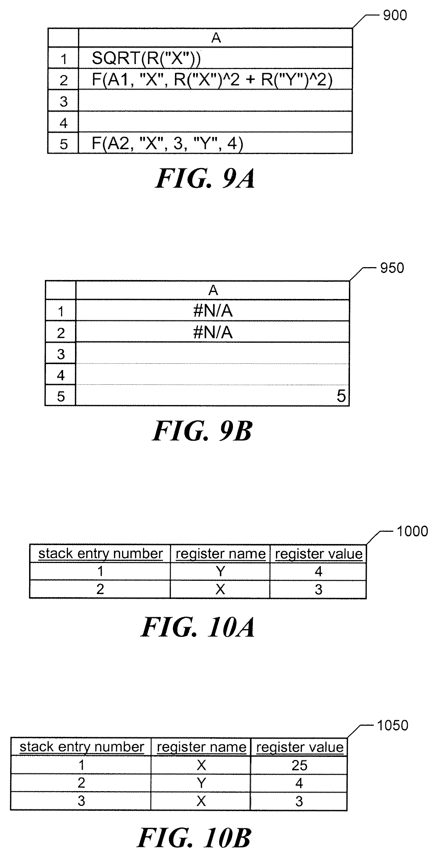

Figures 9A-9B show a second example, in which the arguments X and Y are passed to a first user-defined function, which in turns calls a second user-defined function to which it passes a separate parameter X. Figure 9A shows a spreadsheet portion 900 containing these two functions and a call to the first with the formulas contained by each cell displayed. It can be seen that cell A5 calls a user-defined function whose definition is in cell A2, and that the function definition in cell A2 calls a user-defined function whose definition is in cell A1.

Figure 10A is a stack diagram showing the contents of the evaluation context stack after the function F is called in cell A5. It can be seen that, as specified in this call to function F, the stack contains entries reflecting the result 3 for a register X and reflecting the result 4 for a register Y.

Figure 10B is a stack diagram showing the contents of the stack 1050 after the call to function F in cell A2. It can be seen that, in accordance with the call to function F in cell A2, the top entry on the stack now contains the result 25 for the register X.

When the function R is called in cell A2 to return the result of register X, it returns the result for the top-most occurrence of register X, the result 25 in stack entry number 1. Accordingly, it can be seen that the function R returns the result most recently passed as a parameter having a matching name. The indication of the function F in cell A2 returns the result 5, which is in turn returned by the invocation of the function F in cell A5. Figure 9B, which shows the results of the formulas contained by each cell, shows that the formula contained by cell A5 evaluates to the result 5.

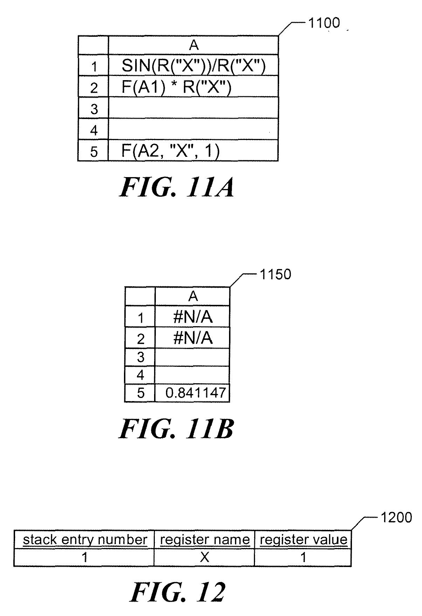

Figures 11A-11B are spreadsheet diagrams showing a third example. Figure 11A shows the formulas contained in each cell. It can be seen that cell A5 calls the user-defined function defined in cell A2, passing it the result 1 for an X parameter.

Figure 12 is a stack diagram showing the evaluation context stack 1200 after the call to the user-defined function defined in cell A2 is made in cell A5. It shows that a register named X has the result 1. Returning to Figure 11A, when the user-defined function defined in cell A2 is called, it uses the R function to retrieve the result 1 from the evaluation context stack for the parameter X, and calls the user-defined function defined in cell A1 without passing the user-defined function defined in cell A1 any parameters. Accordingly, when the user-defined function defined in cell A1 is called, the evaluation context stack is in the same state shown in Figure 12, i.e., no further arguments have been pushed onto the stack by the call in cell A2. Accordingly, when the user-defined function defined in cell A1 twice calls the R function to retrieve a result for the argument X, the R function returns the register result 1 from stack entry number 1, provided by the function invocation in cell A5. Thus, a later-called user-defined function in a calling chain can take advantage of a parameter result specified for an earlier-called user-defined function in the chain.

Figure 11B shows the spreadsheet portion of Figure 11A with the results of the formulas contained by each cell displayed. It can be seen that cell A5 has a result that is based upon the evaluation of both of the user-defined functions defined in cells A1 and A2.

It will be appreciated by those skilled in the art that the above-described facility may be straightforwardly adapted or extended in various ways. For example, the facility may be used with spreadsheet applications and other similar applications that use data structures other than cells, and/or those that can be referenced using various other techniques and reference types than those discussed above. Further, the facility may attribute different names to the built-in functions F and R. Alternatively, the facility may operate without such built-in functions, and perform additional parsing or other techniques to identify user-defined function definitions and invocations in a spreadsheet. While the foregoing description makes reference to preferred embodiments, the scope of the invention is defined solely by the claims that follow and the elements recited therein.

**Claims**

1. A method in a computing system for enabling the use of user-defined functions in a spreadsheet document, comprising:

   as part of evaluating an expression stored in a first cell of the spreadsheet document:

   identifying in the cell a call to a built-in function F for invoking user-defined functions, the call to the built-in function F passing (a) a reference to a second cell in which the user-defined function to be invoked is defined, (b) the name of an argument of the user-defined function defined in the second cell, and (c) a value for the argument of the user-defined function defined in the second cell;
   invoking the built-in function F to:

   retrieve a definition of the indicated user-defined function,
   push the argument name and argument value onto an evaluation context stack,
   identify in the definition a call to a built-in function R for collecting passed user-defined function argument values, the call to the built-in function R passing the argument name received as a parameter to the built-in function F,
   invoke the built-in function R to retrieve from the evaluation context stack the value passed for the argument of the user-defined function,
   use the collected argument value to evaluate the user-defined function to obtain a user-defined function result value,
   pop the argument name and argument value off of the evaluation context stack, and

return the obtained user-defined function result value; and

determining a value for the expression stored in the cell based on the returned obtained a user-defined function result value.

2. A method in a computing system for enabling the use of user-defined functions in a spreadsheet document, them method comprising:

as part of evaluating an expression stored in a cell of the spreadsheet document:

identifying in the cell a call to a first built-in function for invoking user-defined functions, the call to the first built-in function passing (a) an indication of the user-defined function to be invoked and (b) a value for an argument of the user-defined function;
invoking the first built-in function to:

retrieve a definition of the indicated user-defined function,
identify in the definition a call to a second built-in function for collecting user-defined function argument values,
invoke the second built-in function to collect the value passed for the argument of the user-defined function, and
use the collected argument value to evaluate the user-defined function to obtain a user-defined function result value; and

determining a value for the expression stored in the cell based on the obtained a user-defined function result value.

3. The method of claim 2 wherein the indication of the user-defined function to be invoked passed by the identified call to the first built-in function is a column/row reference to a spreadsheet cell containing a definition for the indicated user-defined function.

4. The method of claim 2 wherein the indication of the user-defined function to be invoked passed by the identified call to the first built-in function is a named reference to a spreadsheet cell containing a definition for the indicated user-defined function.

5. The method of claim 2 wherein the indication of the user-defined function to be invoked passed by the identified call to the first built-in function is a user-defined name for the indicated user-defined function.

6. The method of claim 2 wherein the indication of the user-defined function to be invoked passed to the first built-in function identifies a spreadsheet cell containing the definition of the indicated user-defined function, and wherein the definition of the indicated user-defined function is retrieved from the identified spreadsheet cell.

7. The method of claim 2 wherein the call to the first built-in function further passes a name for the argument of the user-defined function, the invocation of the first built-in function further pushing the user-defined function argument name and value onto a stack, the invocation of the second built-in function receiving the name for the argument of the user-defined function and using the name for the argument of the user-defined function to retrieve the value stored with the top-most occurrence of the name on the stack.

8. A computer-readable medium whose contents cause a computing system to perform a method for enabling the use of user-defined functions in a spreadsheet document, them method comprising:

as part of evaluating an expression stored in a cell of the spreadsheet document:

identifying in the cell a call to a first built-in function for invoking user-defined functions, the call to the first built-in function passing (a) an indication of the user-defined function to be invoked and (b) a value for an argument of the user-defined function;
invoking the first built-in function to:

retrieve a definition of the indicated user-defined function,

identify in the definition a call to a second built-in function for collecting user-defined function argument values,

invoke the second built-in function to collect the value passed for the argument of the user-defined function, and

use the collected argument value to evaluate the user-defined function to obtain a user-defined function result value; and

determining a value for the expression stored in the cell based on the obtained a user-defined function result value.

9. A method in a computing system for enabling the use of user-defined functions in a spreadsheet document comprised of cells, the method comprising:

receiving a trigger to evaluate cells including a first cell;

in response to receiving the trigger, determining that the first cell contains an invocation of a user-defined function defined in a second cell; and

in response to determining that the first cell contains an invocation of a user-defined function defined in the second cell, applying the user-defined function defined in the second cell to (a) determine a result value for the invocation of the user-defined function defined in the second cell and (b) from the determined result value, obtain a value for the first cell.

10. The method of claim 9 wherein the invocation of the user-defined function includes a value for a parameter of the user-defined function, and wherein user-defined function is applied to the included parameter value.

11. A computing system for enabling the use of user-defined functions in a spreadsheet document comprised of cells, the computing system comprising:

a cell evaluation subsystem that, in response to receiving trigger to evaluate cells including a distinguished cell, determines that the distinguished cell contains an invocation of a user-defined function; and

a user-defined function invocation subsystem that, in response to a determination by the cell evaluation subsystem that that the distinguished cell contains an invocation of a user-defined function, applies the user-defined function to (a) determine a result value for the invocation of the user-defined function and (b) from the determined result value, obtain a value for the distinguished cell.

12. A computer-readable medium containing a spreadsheet application, the spreadsheet application, when executed on a computing system, providing two built-in functions:

a first built-in function for invoking a user-defined function, the first built-in function taking parameters including: (a) an indication of a user-defined function to be invoked, (b) a name for an argument of the indicated user-defined function, and (c) a value for the argument of the indicated user-defined function; and

a second built-in function for retrieving the value passed for the argument of the user-defined function, the second built-in function taking parameters including the name for the argument of the indicated user-defined function.

13. The computer-readable medium of claim 12 wherein the first built-in function has the name F, and the second built-in function has the name R.

14. The computer-readable medium of claim 12 wherein the first built-in function takes parameters including zero or more pairs of argument names and argument values for the indicated user-defined function.

15. The computer-readable medium of claim 12 wherein the first built-in function pushes the argument name and argument value for the indicated user-defined function onto a stack, and wherein the second built-in function retrieves the value passed for the argument of the user-defined function from the stack.

16. The computer-readable medium of claim 15 wherein, when:

(1) the first built-in function is invoked with (a) an indication of a first user-defined function, (b) a distinguished argument name, and (c) a first value, and
(2) the first user-defined function invokes the first built-in function with (a) an indication of a second user-defined function, (b) the distinguished argument name, and (c) a second value,

the second built-in function, (1) when called from the second user-defined function with the distinguished argument name, returns the second value, and, (2) when called from the first user-defined function with the distinguished argument name, returns the first value.

17. The computer-readable medium of claim 15 wherein, when:

(1) the first built-in function is invoked with (a) an indication of a first user-defined function, (b) a distinguished argument name, and (c) a distinguished value, and
(2) the first user-defined function invokes the first built-in function with (a) an indication of a second user-defined function, and (b) either no argument names or argument names that do not include the distinguished argument name,

the second built-in function, (1) when called from the second user-defined function with the distinguished argument name, returns the distinguished value.

18. One or more computer memories collectively containing a spreadsheet document data structure, the spreadsheet document comprising:

a first cell containing a call to a first built-in function for invoking a user-defined function, the call to a first built-in function passing: (a) an indication of a second cell containing a definition of a user-defined function to be invoked, (b) a name for an argument of the indicated user-defined function, and (c) a value for the argument of the indicated user-defined function; and
the second cell, containing the definition of a user-defined function to be invoked, itself containing a call to a second built-in function for retrieving the value passed for the argument of the user-defined function, the call to the second built-in function taking parameters passing the name for the argument of the indicated user-defined function.

19. The computer memories of claim 18 wherein the first built-in function has the name F, and the second built-in function has the name R.

|   | A | B | C |
|---|---|---|---|
| 1 | total weight | number of items | average weight |
| 2 | 35 | 3 | =TRUNC(A2/B2,0) |
| 3 | 11 | 2 | =TRUNC(A3/B3,0) |
| 4 | 8 | 8 | =TRUNC(A4/B4,0) |

— 100

*FIG. 1A*

|   | A | B | C |
|---|---|---|---|
| 1 | total weight | number of items | average weight |
| 2 | 35 | 3 | 11 |
| 3 | 11 | 2 | 5 |
| 4 | 8 | 8 | 1 |

— 150

*FIG. 1B*

|   | A | B | C |
|---|---|---|---|
| 1 | total weight | number of items | average weight |
| 2 | 35 | 3 | =ROUND(A2/B2,0) |
| 3 | 11 | 2 | =ROUND(A3/B3,0) |
| 4 | 8 | 8 | =ROUND(A4/B4,0) |

— 200

*FIG. 2A*

|   | A | B | C |
|---|---|---|---|
| 1 | total weight | number of items | average weight |
| 2 | 35 | 3 | 12 |
| 3 | 11 | 2 | 6 |
| 4 | 8 | 8 | 1 |

— 250

*FIG. 2B*

**FIG. 3**

EP 1 628 228 A2

400

| | A | B | C |
|---|---|---|---|
| 1 | TRUNC (R("total_weight")/R("number_items"), 0) | | |
| 2 | | | |
| 3 | total weight | number of items | average weight |
| 4 | 35 | 3 | F(A1, "total_weight", A4, "number items", B4) |
| 5 | 11 | 2 | F(A1, "total_weight", A5, "number items", B5) |
| 6 | 8 | 8 | F(A1, "total_weight", A6, "number items", B6) |

## FIG. 4A

450

| | A | B | C |
|---|---|---|---|
| 1 | #N/A | | |
| 2 | | | |
| 3 | total weight | number of items | average weight |
| 4 | 35 | 3 | 11 |
| 5 | 11 | 2 | 5 |
| 6 | 8 | 8 | 1 |

## FIG. 4B

500

| | A | B | C |
|---|---|---|---|
| 1 | ROUND (R("total_weight")/R("number_items"), 0) | | |
| 2 | | | |
| 3 | total weight | number of items | average weight |
| 4 | 35 | 3 | F(A1, "total_weight", A4, "number items", B4) |
| 5 | 11 | 2 | F(A1, "total_weight", A5, "number items", B5) |
| 6 | 8 | 8 | F(A1, "total_weight", A6, "number items", B6) |

## FIG. 5A

550

| | A | B | C |
|---|---|---|---|
| 1 | #N/A | | |
| 2 | | | |
| 3 | total weight | number of items | average weight |
| 4 | 35 | 3 | 12 |
| 5 | 11 | 2 | 6 |
| 6 | 8 | 8 | 1 |

## FIG. 5B

F (cellReference [, registerName1, registerValue1 . . .]) ⟋— 600

↓

retrieve formula from cellReference ⟋— 601

↓

translate local references in retrieved formula to global references ⟋— 602

↓

push each passed registerName, registerValue pair onto evaluation context stack as new stack entry ⟋— 603

↓

evaluate formula against evaluation context ⟋— 604

↓

pop stack entry for each passed registerName, registerValue pair off of evaluation context stack ⟋— 605

↓

return result obtained by evaluating formula ⟋— 606

*FIG. 6*

| stack entry number | register name | register value |
|---|---|---|
| 1 | number_items | 3 |
| 2 | total_weight | 35 |

*— 700*

## FIG. 7

R (registerName) ⎯ 800

for each stack entry in evaluation context stack, starting at the top of the stack ⎯ 801

passed registerName = = registerName in stack entry ⎯ 802

Yes → return registerValue in stack entry ⎯ 803

No

next stack entry ⎯ 804

return 0 ⎯ 805

*FIG. 8*

|   | A |
|---|---|
| 1 | SQRT(R("X")) |
| 2 | F(A1, "X", R("X")^2 + R("Y")^2) |
| 3 | |
| 4 | |
| 5 | F(A2, "X", 3, "Y", 4) |

*FIG. 9A*

900

|   | A |
|---|---|
| 1 | #N/A |
| 2 | #N/A |
| 3 | |
| 4 | |
| 5 | 5 |

*FIG. 9B*

950

| stack entry number | register name | register value |
|---|---|---|
| 1 | Y | 4 |
| 2 | X | 3 |

*FIG. 10A*

1000

| stack entry number | register name | register value |
|---|---|---|
| 1 | X | 25 |
| 2 | Y | 4 |
| 3 | X | 3 |

*FIG. 10B*

1050

1100

| | A |
|---|---|
| 1 | SIN(R("X"))/R("X") |
| 2 | F(A1) * R("X") |
| 3 | |
| 4 | |
| 5 | F(A2, "X", 1) |

## FIG. 11A

1150

| | A |
|---|---|
| 1 | #N/A |
| 2 | #N/A |
| 3 | |
| 4 | |
| 5 | 0.841147 |

## FIG. 11B

1200

| stack entry number | register name | register value |
|---|---|---|
| 1 | X | 1 |

## FIG. 12